# EUROPEAN PATENT SPECIFICATION

(11) **EP 4 299 443 B1**
(45) Date of publication and mention of the grant of the patent: **10.09.2025**
(21) Application number: 23182457.4
(22) Date of filing: 29.06.2023
(51) Int. Cl.: B64D 11/06, B60R 7/04, B64D 11/00

(54) **SYSTEM INCLUDING STOWAGE POUCH**
SYSTEM BEINHALTEND EINE STAUTASCHE
SYSTÈME COMPRENANT UNE POCHE DE RANGEMENT

(30) Priority: 02.07.2022 IN 202211038223; 17.04.2023 US 202318135392
(43) Date of publication of application: 03.01.2024
(73) Proprietor: B/E Aerospace, Inc., Winston-Salem, NC 27105 (US)
(72) Inventor: PRATHIPATI, Krishna Chaitanya, 5000050 Hyderbad (IN); KANDUKURI, Ravindra Ramulu, Secunderabad (IN)
(74) Representative: Dehns

(56) References cited:
- CN-A- 108 583 374
- US-A1- 2007 152 480
- US-A1- 2017 246 972

## Description

### CROSS-REFERENCE TO RELATED APPLICATIONS

The present application is related to and claims priority from: Indian Application Serial Number 202211038223, titled SYSTEM INCLUDING CONNECTOR BRACKET, filed July 2, 2022.

### BACKGROUND

Current aircraft seating, especially economy class, does not provide a desired amount of storage space to the passengers, especially on long haul planes where passengers carry many personal belongings. Currently, the stowage space, typically, is only a literature pocket for the economy seating, which is already occupied with some magazines. US2007152480A1 relates to a luggage retention device as well as to a seat with such a luggage retention device, in particular, for use in aircraft. US2017246972A1 relates to passenger seats or the like. CN108583374A relates to the field of public transportation equipment accessories, in particular to a bus correction seat.

### SUMMARY

In one aspect, embodiments of the inventive concepts disclosed herein are directed to a system as claimed in claim 1. The system includes a seat frame installed in a vehicle. The seat frame includes a seat pan, a fore seat frame beam, and an aft seat frame beam, wherein the fore seat frame beam and the aft seat frame beam are under the seat pan, wherein the fore seat frame beam is parallel to the aft seat frame. The system includes a pliable stowage pouch accessible by a passenger seated behind the seat frame. The pliable stowage pouch includes: an opening located at an aft side of the seat frame; a top panel extending from the opening; an end panel abutting the top panel; a first side panel abutting the top panel and the end panel, the first side panel being elbow-shaped; a second side panel abutting the top panel and the end panel, the second side panel being elbow-shaped; a bottom panel abutting the first side panel, the second side panel, and the end panel; a curved panel extending from the opening toward the bottom panel and abutting the first side panel, the second side panel, and the bottom panel; a closeout flap extending from a top edge of the opening and abutting the top panel, wherein the closeout flap is configured to close the opening in a first state and to open the opening in a second state; aft straps attached to the top panel and secured around the aft seat frame beam; and fore straps attached to the top panel and secured around the fore seat frame beam.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is an aft side perspective view of an exemplary embodiment of a system including a vehicle including a seat frame and a pliable stowage pouch according to the inventive concepts disclosed herein.
FIG. 2 is a side view of an exemplary embodiment of the seat frame and the pliable stowage pouch of FIG. 1 according to the inventive concepts disclosed herein.
FIG. 3 is an aft side perspective view of the pliable stowage pouch of FIG. 1 according to the inventive concepts disclosed herein.
FIG. 4 is another aft side perspective view of the pliable stowage pouch of FIG. 1 according to the inventive concepts disclosed herein.
FIG. 5 is top side view of the pliable stowage pouch of FIG. 1 according to the inventive concepts disclosed herein.
FIG. 6 is another view of the pliable stowage pouch of FIG. 1 according to the inventive concepts disclosed herein.
FIG. 7 is another view of the pliable stowage pouch of FIG. 1 according to the inventive concepts disclosed herein.
FIG. 8 is a view an exemplary embodiment of a strap of the pliable stowage pouch of FIG. 1 according to the inventive concepts disclosed herein.
FIG. 9 is another aft side perspective view of an exemplary embodiment of the seat frame and the pliable stowage pouch of FIG. 1 according to the inventive concepts disclosed herein.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings but are limited by the appended claims. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details as long as they are covered by the appended claims. In other instances, well-known features may not be described in detail to avoid unnecessarily complicating the instant disclosure. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Broadly, embodiments of the inventive concepts disclosed herein are directed to a system including a stowage pouch.

In some embodiments, the stowage pouch may be attached to seat frame beams at an aft side of a seat (e.g., a vehicle seat, such as an aircraft seat, a bus seat, or a train seat).

Some embodiments may provide more storage space to a passenger seated behind a seat that the stowage pouch is attached to. For example, the stowage pouch may be used in economy and premium economy seating's without encroaching any of the passenger comfort space, including leg room. The stowage pouch can be attached to seat frame beams, below a seat pan, with the opening facing the aft of the aircraft and to be used by the passenger seating behind the seat installed with the stowage pouch. Such pouch may be big enough to act as an additional stowage for the passengers to store their personal belongings. Some embodiments solve the problem of current seating that does not currently provide enough storage space to the passengers, especially on long-haul planes where passengers carry many personal belongings.

In some embodiments, the stowage pouch may be made of pliable material (e.g., leather or fabric (e.g., canvas or soft cloth)), instead of rigid thermoform plastic. As such, the stowage pouch may be flexible to provide legroom to a passenger that is not impacted due to addition of this feature. Since it's a flexible and/or pliable storage pouch, a passenger can trade-off leg-space comfort verses stowage needs based on their preference and comfort levels. For example, if passenger does not use this additional stowage space, the passenger still has complete leg room as the pliable nature of the pouch allows the passenger to extend their legs. For example, other passengers might use the pouch to store belongings in the middle so that they can stretch their legs on either side of the stowage pouch.

In some embodiments, the stowage pouch uses otherwise unused dead-space to for stowage. Additionally, if the belongings are pushed all the way towards the end of the pouch, the stowage pouch might not take away any of the legroom. The stowage pouch may be big enough to store more belongings of passengers as compared to existing stowage solutions.

In some embodiments, the stowage pouch may include straps secured around the seat frame beams, such as by using buttons, and locations of the buttons may be placed in such a way that the buttons cannot be viewed and accessed by passengers.

In some embodiments, the stowage pouch may include a closeout flap that can be opened and closed by using, e.g., a zipper.

Some embodiments provide a low cost and low weight solution for improving passenger stowage on aircraft. The stowage pouches may have low maintenance costs and may be easily replaceable. Some embodiments include straps that are easy to install around seat frame beams by using buttons or any other suitable fastener.

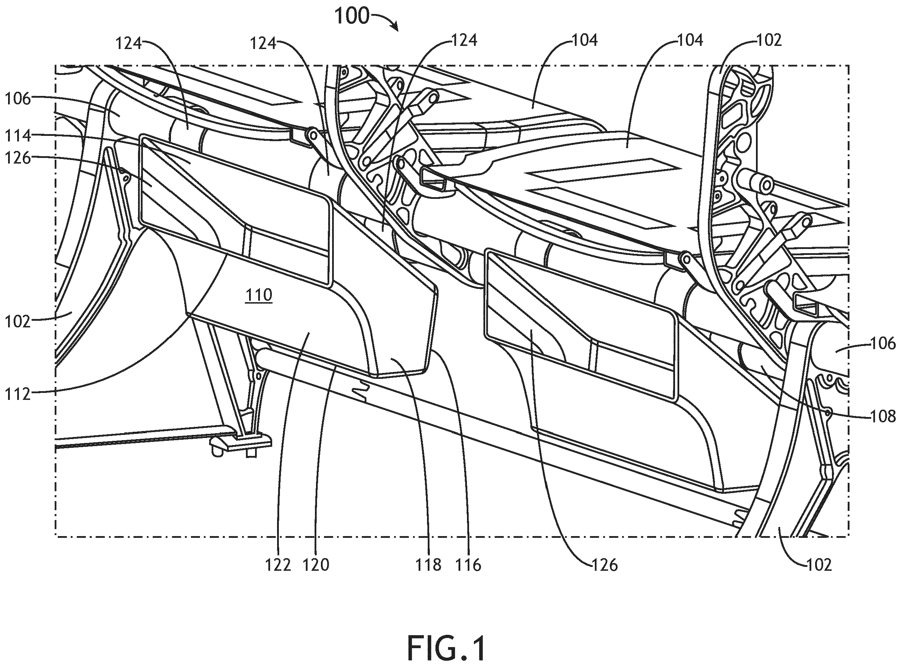

Referring now to FIG. 1, an aft perspective view of an exemplary embodiment of a system including a vehicle (e.g., aircraft 100, watercraft, automobile, train, etc.) including at least one seat frame 102 (e.g., an aircraft seat frame) and a pliable stowage pouch 110 is depicted according to the inventive concepts. In some embodiments, the system may include at least one multiple seat assembly, which may include multiple connected seats that may be installed as a row of seats.

The seat frame 102 may be installed in a vehicle (e.g., aircraft 100). The seat frame 102 may include a seat pan 104, an aft seat frame beam 106, and a fore seat frame beam 108. The fore seat frame beam 108 and the aft seat frame beam 106 may be under the seat pan 104. The fore seat frame beam 108 may be parallel to the aft seat frame 106.

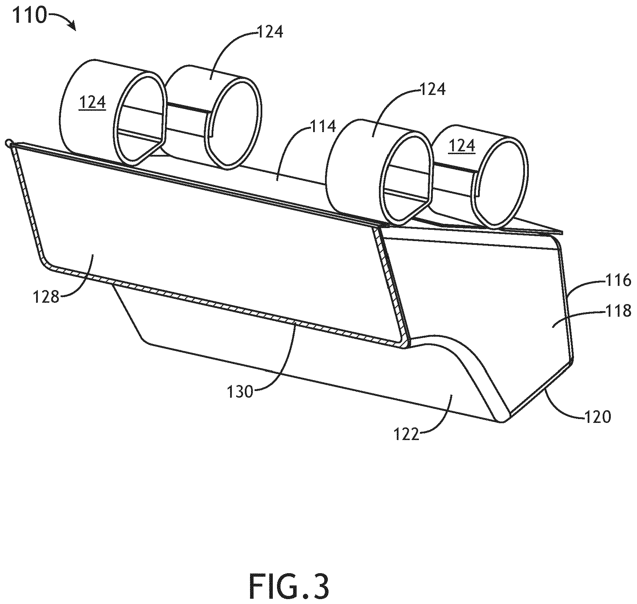

The pliable stowage pouch 110 may be accessible by a passenger seated behind the seat frame 102. The pliable stowage pouch 110 may include: an opening 112 located at an aft side of the seat frame 102; a top panel 114 extending from the opening 112; an end panel 116 abutting the top panel 114; a first side panel 118 abutting the top panel 114 and the end panel 116, the first side panel 118 being elbow-shaped; a second side panel abutting the top panel 114 and the end panel 116, the second side panel 118 being elbow-shaped; a bottom panel 120 abutting the first side panel 118, the second side panel 118, and the end panel 116; a curved panel 122 extending from the opening 112 toward the bottom panel 120 and abutting the first side panel 118, the second side panel 118, and the bottom panel 120; a closeout flap 128 (as shown in FIGS. 3, 4, and 6) extending from a top edge of the opening 112 and abutting the top panel 114, wherein the closeout flap 128 is configured to close the opening 112 in a first state (e.g., a zipped state) and to open the opening in a second state (e.g., an unzipped state); aft straps 124 attached to the top panel 114 and secured around the aft seat frame beam 106; and/or fore straps 124 attached to the top panel 114 and secured around the fore seat frame beam 108.

In some embodiments, the pliable stowage pouch 110 further includes first and second flexible shaping structures 126. The first flexible shaping structure 126 may abut the first side panel 118 and extend from the opening 112 along the first side panel 118 toward the bottom panel 120. The second flexible shaping structure 126 may abut the second side panel 118 and extend from the opening 112 along the second side panel 118 toward the bottom panel 120. In some embodiments, each of the first and second flexible shaping structures 126 may be at least composed of a rubber material (e.g., neoprene rubber).

In some embodiments, each of the top panel 114, the end panel 116, the bottom panel 120, the first side panel 118, the second side panel 118, the curved panel 122, and the closeout flap 128 may at least be composed of fabric.

In some embodiments, an angle between the top panel 114 and the end panel 116 may be obtuse. In some embodiments, an angle between the bottom panel 120 and the curved panel 122 may be obtuse. In some embodiments, an angle between the bottom panel 120 and the end panel 116 may be a right angle. In some embodiments, an angle between the bottom panel 120 and the first side panel 118 is a right angle, and an angle between the bottom panel 120 and the second side panel 118 is a right angle. In some embodiments, the aft seat frame beam 106 is higher than the fore seat frame 108.

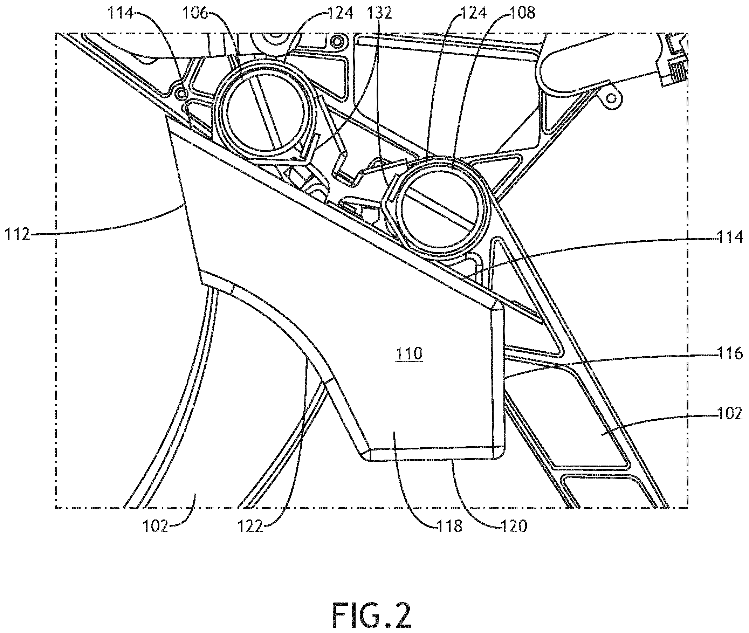

Referring now to FIG. 2, a side view of the system including the seat frame 102 and the pliable stowage pouch 110 of FIG. 1 is shown.

Referring now to FIG. 3, an aft side perspective view of an exemplary embodiment of the pliable stowage pouch 110 of FIG. 1 is shown. As shown in FIG. 3, the pliable stowage pouch 110 may include the closeout flap 128 extending from a top edge of the opening 112 and abutting the top panel 114. In some embodiments, the closeout flap 128 may be configured to close the opening in the first state (e.g., a zipped state) via a zipper 130 extending at least along an edge of the closeout flap 128 and an edge of the curved panel 122. In some embodiments, the closeout flap 128 may be configured to close the opening 112 in the first state (e.g., a zipped state) via the zipper 130 extending at least along edges of the closeout flap 128 and an edge of the curved panel 122, an edge of the first side panel 118, and an edge of the second side panel. In some embodiments, the closeout flap 128 may be attached to the top panel 114, such as with stitches, or the closeout flap 128 may be an extension of the top panel 114. The closeout flap 128 may be opened at the bottom.

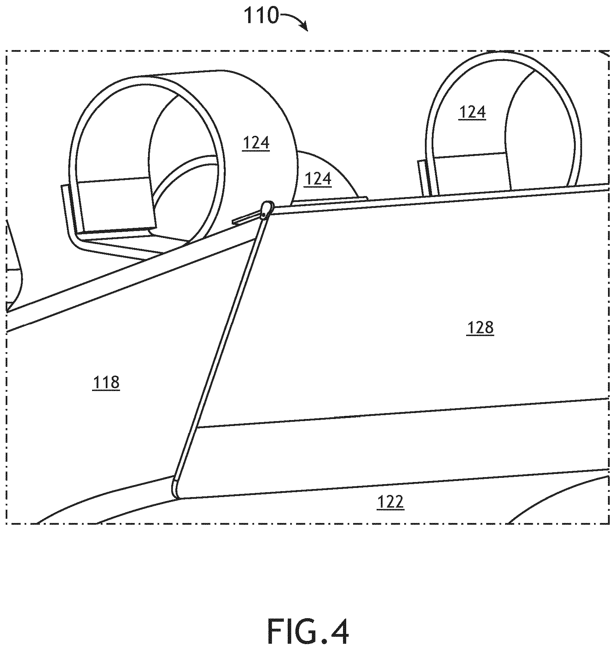

Referring now to FIG. 4, another aft side perspective view of an exemplary embodiment of the pliable stowage pouch 110 of FIG. 1 is shown.

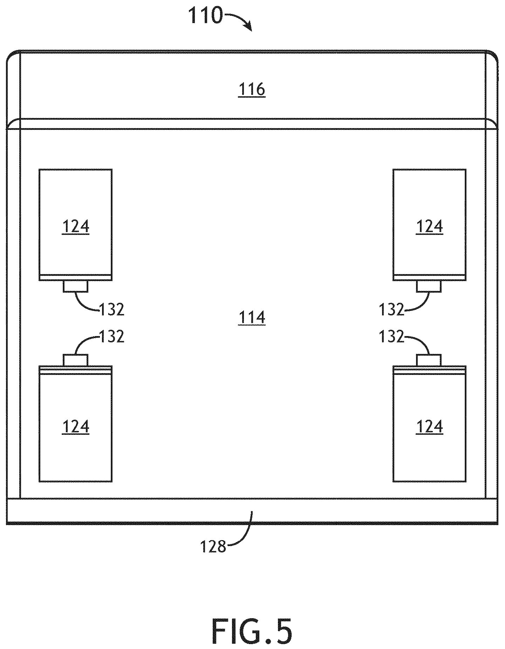

Referring now to FIG. 5, a top side view of an exemplary embodiment of the pliable stowage pouch 110 of FIG. 1 is shown. In some embodiments, each of the aft straps 124 and the fore straps 124 may include a strap and a button 132, wherein each button 132 is configured to secure a given strap around one of the fore seat frame beam 108 or the aft seat frame beam 106. In some embodiments, each of the straps 124 is composed of at least one of plastic, leather, or fabric (e.g., canvas or soft cloth). In some embodiments, when each of the aft straps 124 are secured around the aft seat frame beam 106, the button 132 of each of the aft straps 124 is positioned on a fore side of the aft seat frame beam 106, and when each of the fore straps 124 are secured around the fore seat frame 108, the button 132 of each of the fore straps 124 is positioned on an aft side of the fore seat frame beam 108; for example, positions of the buttons 132 of the fore straps 124 and the aft straps 124 being in between the fore seat frame beam 108 and the aft seat frame beam 106 may inhibit the passenger seated behind the seat frame 102 from viewing and accessing the buttons 132.

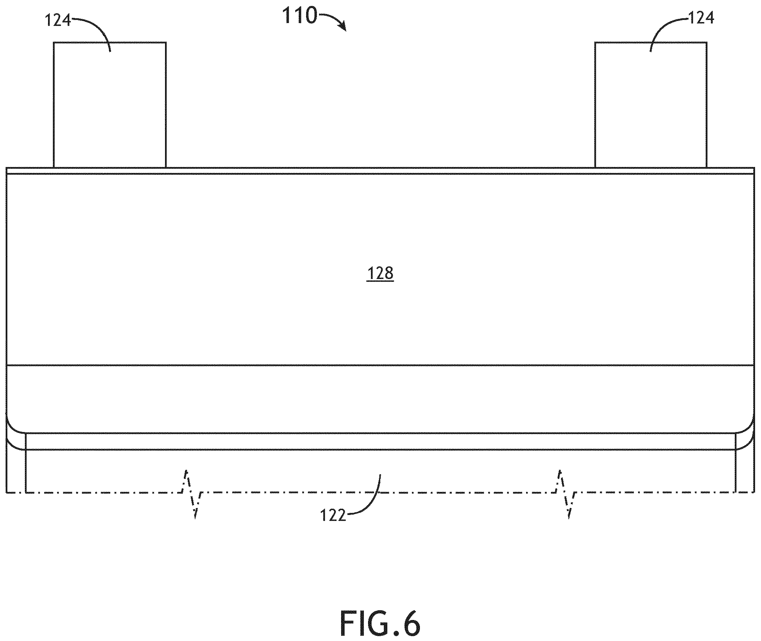

Referring now to FIG. 6, an aft perspective view of an exemplary embodiment of the pliable stowage pouch 110 of FIG. 1 is shown.

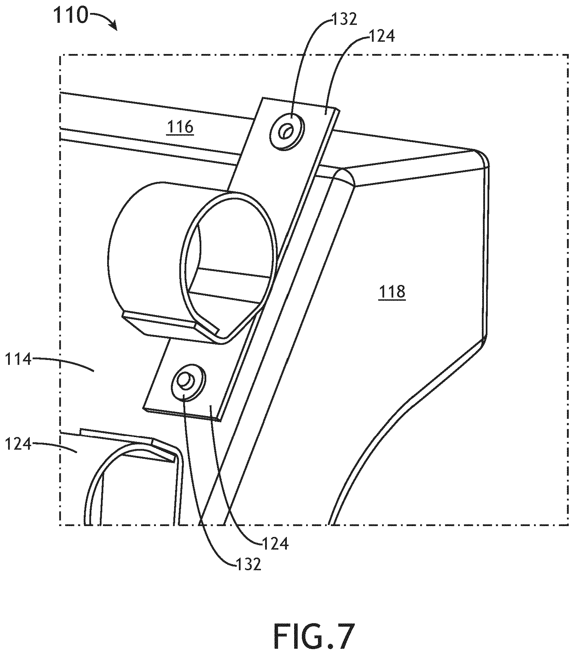

Referring now to FIG. 7, a top perspective view of an exemplary embodiment of the pliable stowage pouch 110 of FIG. 1 is shown.

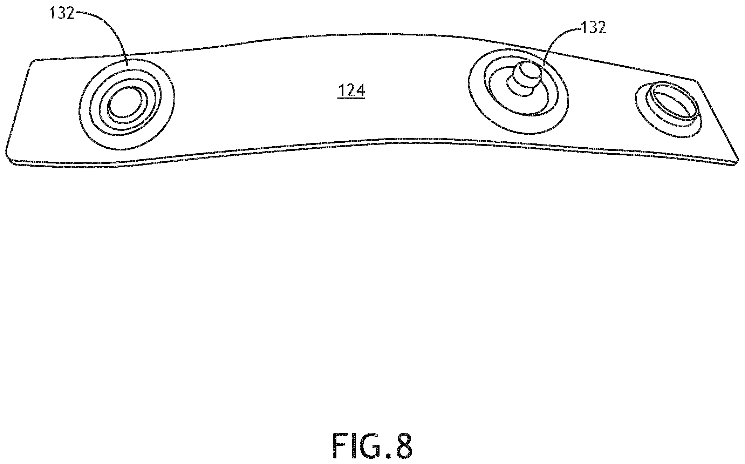

Referring now to FIG. 8, a view of an exemplary embodiment of one of the straps 124 of the pliable stowage pouch 110 of FIG. 1 is shown.

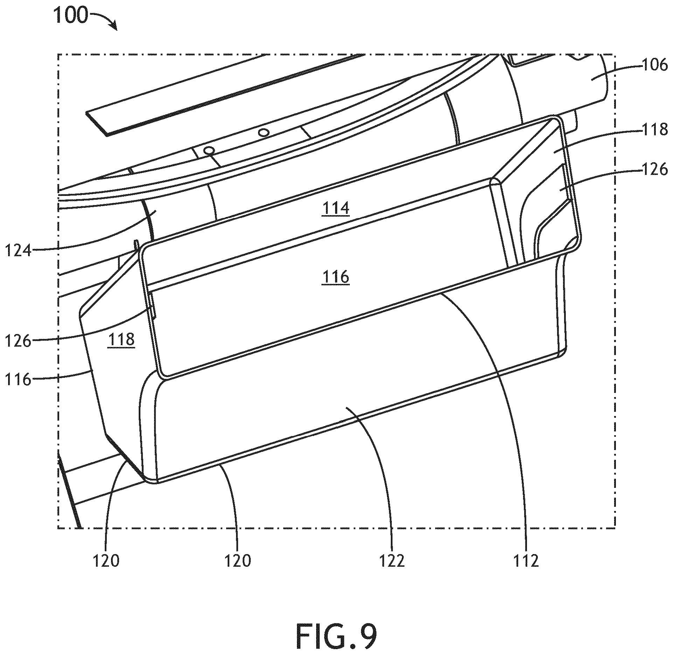

Referring now to FIG. 9, an aft side perspective view of an exemplary embodiment of the pliable stowage pouch 110 of FIG. 1 is shown.

As will be appreciated from the above, embodiments of the inventive concepts disclosed herein are directed to a system including a stowage pouch.

As used throughout, "at least one" means one or a plurality of; for example, "at least one" may comprise one, two, three, ..., one hundred, or more. Similarly, as used throughout, "one or more" means one or a plurality of; for example, "one or more" may comprise one, two, three, ..., one hundred, or more. Further, as used throughout, "zero or more" means zero, one, or a plurality of; for example, "zero or more" may comprise zero, one, two, three, ..., one hundred, or more.

## Claims

1. A system, comprising:
a seat frame (102) installed in a vehicle, the seat frame comprising a seat pan (104), a fore seat frame beam (108), and an aft seat frame beam (106), wherein the fore seat frame beam and the aft seat frame beam are under the seat pan, wherein the fore seat frame beam is parallel to the aft seat frame; and
a pliable stowage pouch (110) accessible by a passenger seated behind the seat frame, comprising:
an opening (112) located at an aft side of the seat frame;
a top panel (114) extending from the opening;
an end panel (116) abutting the top panel;
a first side panel (118) abutting the top panel and the end panel, the first side panel being elbow-shaped;
a second side panel (118) abutting the top panel and the end panel, the second side panel being elbow-shaped;
a bottom panel (120) abutting the first side panel, the second side panel, and the end panel;
a curved panel (122) extending from the opening toward the bottom panel and abutting the first side panel, the second side panel, and the bottom panel;
a closeout flap (128) extending from a top edge of the opening and abutting the top panel, wherein the closeout flap is configured to close the opening in a first state and to open the opening in a second state;
aft straps (124) attached to the top panel and secured around the aft seat frame beam; and
fore straps (124) attached to the top panel and secured around the fore seat frame beam.

2. The system of claim 1, wherein the closeout flap (128) is configured to close the opening in the first state via a zipper (130) extending at least along an edge of the closeout flap and an edge of the curved panel.

3. The system of claim 2, wherein the closeout flap (128) is configured to close the opening in the first state via a zipper (130) extending at least along edges of the closeout flap and an edge of the curved panel, an edge of the first side panel, and an edge of the second side panel.

4. The system of any preceding claim, wherein the pliable stowage pouch (110) further comprises first and second flexible shaping structures (126), the first flexible shaping structure abutting the first side panel (118) and extending from the opening (112) along the first side panel toward the bottom panel (120), the second flexible shaping structure abutting the second side panel (118) and extending from the opening along the second side panel toward the bottom panel.

5. The system of claim 4, wherein each of the first and second flexible shaping structures (126) are at least composed of a rubber material.

6. The system of claim 5, wherein the rubber material is neoprene rubber.

7. The system of any preceding claim, wherein each of the aft straps (124) and the fore straps (124) comprises a strap and a button (132), wherein each button is configured to secure a given strap around one of the fore seat frame beam (108) or the aft seat frame beam (106).

8. The system of claim 7, wherein each of the straps is composed of at least one of plastic, leather, or fabric.

9. The system of claim 7 or 8, wherein when each of the aft straps (124) are secured around the aft seat frame beam (106), the button (132) of each of the aft straps is positioned on a fore side of the aft seat frame beam (106), wherein when each of the fore straps are secured around the fore seat frame, the button (132) of each of the fore straps is positioned on an aft side of the fore seat frame beam.

10. The system of claim 9, wherein positions of the buttons (132) of the fore straps (124) and the aft straps (124) being in between the fore seat frame beam (108) and the aft seat frame beam (106) inhibits the passenger seated behind the seat frame from viewing and accessing the buttons.

11. The system of any preceding claim, wherein each of the top panel (114), the end panel (116), the bottom panel (120), the first side panel (118), the second side panel (118), the curved panel (122), and the closeout flap (128) is at least composed of fabric.

12. The system of any preceding claim, wherein an angle between the top panel (114) and the end panel (116) is obtuse.

13. The system of any preceding claim, wherein an angle between the bottom panel (120) and the curved panel (122) is obtuse

14. The system of any preceding claim, wherein an angle between the bottom panel (120) and the end panel (116) is a right angle; and/or
wherein an angle between the bottom panel (120) and the first side panel (118) is a right angle, wherein an angle between the bottom panel and the second side panel (118) is a right angle; and/or
wherein the aft seat frame beam (106) is higher than the fore seat frame beam.

15. The system of any preceding claim, wherein the vehicle is an aircraft.

## Patentansprüche

1. System, umfassend:
einen Sitzrahmen (102), der in einem Fahrzeug installiert ist, wobei der Sitzrahmen eine Sitzschale (104), einen vorderen Sitzrahmenträger (108) und einen hinteren Sitzrahmenträger (106) umfasst, wobei der vordere Sitzrahmenträger und der hintere Sitzrahmenträger sich unter der Sitzschale befinden, wobei der vordere Sitzrahmenträger parallel zu dem hinteren Sitzrahmen ist; und
eine biegsame Stautasche (110), die für einen hinter dem Sitzrahmen sitzenden Fahrgast zugänglich ist und Folgendes umfasst:
eine Öffnung (112), die sich an einer hinteren Seite des Sitzrahmens befindet;
eine obere Platte (114), die sich von der Öffnung aus erstreckt;
eine Endplatte (116), die an die obere Platte angrenzt;
eine erste Seitenplatte (118), die an die obere Platte und die Endplatte angrenzt, wobei die erste Seitenplatte ellbogenförmig ist;
eine zweite Seitenplatte (118), die an die obere Platte und die Endplatte angrenzt, wobei die erste Seitenplatte ellbogenförmig ist;
eine untere Platte (120), die an die erste Seitenplatte, die zweite Seitenplatte und die Endplatte angrenzt;
eine gekrümmte Platte (122), die sich von der Öffnung in Richtung der unteren Platte erstreckt und an die erste Seitenplatte, die zweite Seitenplatte und die untere Platte angrenzt;
eine Verschlussklappe (128), die sich von einer Oberkante der Öffnung erstreckt und an die obere Platte angrenzt, wobei die Verschlussklappe so konfiguriert ist, dass sie die Öffnung in einem ersten Zustand schließt und in einem zweiten Zustand öffnet;
hintere Gurte (124), die an der oberen Platte befestigt und um den hinteren Sitzrahmenträger herum befestigt sind; und
Vordergurte (124) die an der oberen Platte befestigt und um den vorderen Sitzrahmenträger herum befestigt sind.

2. System nach Anspruch 1, wobei die Verschlussklappe (128) so konfiguriert ist, dass sie die Öffnung im ersten Zustand über einen Reißverschluss (130) verschließt, der sich zumindest entlang einer Kante der Verschlussklappe und einer Kante der gekrümmten Platte erstreckt.

3. System nach Anspruch 2, wobei die Verschlussklappe (128) so konfiguriert ist, dass sie die Öffnung im ersten Zustand über einen Reißverschluss (130) verschließt, der sich zumindest entlang der Kanten der Verschlussklappe und einer Kante der gekrümmten Platte, einer Kante der ersten Seitenplatte und einer Kante der zweiten Seitenplatte erstreckt.

4. System nach einem der vorhergehenden Ansprüche, wobei die biegsame Stautasche (110) ferner eine erste und eine zweite flexible Formstruktur (126) umfasst, wobei die erste flexible Formstruktur an der ersten Seitenwand (118) anliegt und sich von der Öffnung (112) entlang der ersten Seitenwand in Richtung der unteren Platte (120) erstreckt, und die zweite flexible Formstruktur an der zweiten Seitenwand (118) anliegt und sich von der Öffnung entlang der zweiten Seitenwand in Richtung der unteren Platte erstreckt.

5. System nach Anspruch 4, wobei die erste und die zweite flexible Formstruktur (126) zumindest jeweils aus einem Gummimaterial bestehen.

6. System nach Anspruch 5, wobei das Gummimaterial Neoprengummi ist.

7. System nach einem der vorhergehenden Ansprüche, wobei die hinteren Gurte (124) und die vorderen Gurte (124) jeweils einen Gurt und einen Knopf (132) umfassen, wobei jeder Knopf dazu ausgelegt ist, einen bestimmten Gurt um den vorderen Sitzrahmenträger (108) oder den hinteren Sitzrahmenträger (106) zu befestigen.

8. System nach Anspruch 7, wobei jeder der Gurte aus mindestens einem der Materialien Kunststoff, Leder oder Stoff besteht.

9. System nach Anspruch 7 oder 8, wobei, wenn jeder der hinteren Gurte (124) um den hinteren Sitzrahmenträger (106) befestigt ist, der Knopf (132) jedes der hinteren Gurte auf einer Vorderseite des hinteren Sitzrahmenträgers (106) positioniert ist, wobei, wenn jeder der vorderen Gurte um den vorderen Sitzrahmen befestigt ist, der Knopf (132) jedes der vorderen Gurte auf einer Rückseite des vorderen Sitzrahmenträgers positioniert ist.

10. System nach Anspruch 9, wobei die Positionen der Knöpfe (132) der vorderen Gurte (124) und der hinteren Gurte (124) zwischen dem vorderen Sitzrahmenträger (108) und dem hinteren Sitzrahmenträger (106) verhindern, dass der hinter dem Sitzrahmen sitzende Fahrgast die Knöpfe sieht und darauf zugreifen kann.

11. System gemäß einem der vorhergehenden Ansprüche, wobei die obere Platte (114), die Endplatte (116), die untere Platte (120), die erste Seitenplatte (118), die zweite Seitenplatte (118), die gekrümmte Platte (122) und die Verschlussklappe (128) zumindest jeweils aus Stoff bestehen.

12. System gemäß einem der vorhergehenden Ansprüche, wobei ein Winkel zwischen der oberen Platte (114) und der Endplatte (116) stumpf ist.

13. System nach einem der vorhergehenden Ansprüche, wobei ein Winkel zwischen der unteren Platte (120) und der gekrümmten Platte (122) stumpf ist.

14. System nach einem der vorhergehenden Ansprüche, wobei ein Winkel zwischen der unteren Platte (120) und der Endplatte (116) ein rechter Winkel ist; und/oder
wobei ein Winkel zwischen der unteren Platte (120) und der ersten Seitenplatte (118) ein rechter Winkel ist, wobei ein Winkel zwischen der unteren Platte und der zweiten Seitenplatte (118) ein rechter Winkel ist; und/oder
wobei der hintere Sitzrahmenträger (106) höher als der vordere Sitzrahmenträger ist.

15. Das System nach einem der vorhergehenden Ansprüche, wobei das Fahrzeug ein Luftfahrzeug ist.

## Revendications

1. Système, comprenant :
un cadre de siège (102) installé dans un véhicule, le cadre de siège comprenant un plateau de siège (104), une poutre de cadre de siège avant (108) et une poutre de cadre de siège arrière (106), dans lequel la poutre de cadre de siège avant et la poutre de cadre de siège arrière sont sous le plateau de siège, dans lequel la poutre de cadre de siège avant est parallèle au cadre de siège arrière ; et
une poche de rangement pliable (110) accessible par un passager assis derrière le cadre de siège, comprenant :
une ouverture (112) située sur un côté arrière du cadre du siège ;
un panneau supérieur (114) s'étendant à partir de l'ouverture ; un panneau d'extrémité (116) venant en butée contre le panneau supérieur ;
un premier panneau latéral (118) venant en butée contre le panneau supérieur et le panneau d'extrémité, le premier panneau latéral étant en forme de coude ;
un second panneau latéral (118) venant en butée contre le panneau supérieur et le panneau d'extrémité, le second panneau latéral étant en forme de coude ;
un panneau inférieur (120) venant en butée contre le premier panneau latéral, le second panneau latéral et le panneau d'extrémité ;
un panneau incurvé (122) s'étendant de l'ouverture vers le panneau inférieur et venant en butée contre le premier panneau latéral, le second panneau latéral et le panneau inférieur ;
un rabat de fermeture (128) s'étendant à partir d'un bord supérieur de l'ouverture et venant en butée contre le panneau supérieur, le rabat de fermeture étant configuré pour fermer l'ouverture dans un premier état et pour ouvrir l'ouverture dans un second état ;
des sangles arrière (124) attachées au panneau supérieur et fixées autour de la poutre de cadre de siège arrière ; et
des sangles avant (124) attachées au panneau supérieur et fixées autour de la poutre de cadre de siège avant.

2. Système selon la revendication 1, dans lequel le rabat de fermeture (128) est configuré pour fermer l'ouverture dans le premier état à l'aide d'une fermeture à glissière (130) s'étendant au moins le long d'un bord du rabat de fermeture et d'un bord du panneau incurvé.

3. Système selon la revendication 2, dans lequel le rabat de fermeture (128) est configuré pour fermer l'ouverture dans le premier état à l'aide d'une fermeture à glissière (130) s'étendant au moins le long des bords du rabat de fermeture et d'un bord du panneau incurvé, d'un bord du premier panneau latéral et d'un bord du second panneau latéral.

4. Système selon une quelconque revendication précédente, dans lequel la poche de rangement pliable (110) comprend également des première et seconde structures de mise en forme flexibles (126), la première structure de mise en forme flexible venant en butée contre le premier panneau latéral (118) et s'étendant depuis l'ouverture (112) le long du premier panneau latéral vers le panneau inférieur (120), la seconde structure de mise en forme flexible venant en butée contre le second panneau latéral (118) et s'étendant depuis l'ouverture le long du second panneau latéral vers le panneau inférieur.

5. Système selon la revendication 4, dans lequel chacune des première et seconde structures de mise en forme flexibles (126) est au moins composée d'un matériau en caoutchouc.

6. Système selon la revendication 5, dans lequel le matériau en caoutchouc est du caoutchouc néoprène.

7. Système selon une quelconque revendication précédente, dans lequel chacune des sangles arrière (124) et des sangles avant (124) comprend une sangle et un bouton (132), chaque bouton étant configuré pour fixer une sangle donnée autour de l'une de la poutre de cadre de siège avant (108) ou de la poutre de cadre de siège arrière (106).

8. Système selon la revendication 7, dans lequel chacune des sangles est composée d'au moins l'un du plastique, du cuir ou du tissu.

9. Système selon la revendication 7 ou 8, dans lequel lorsque chacune des sangles arrière (124) est fixée autour de la poutre de cadre de siège arrière (106), le bouton (132) de chacune des sangles arrière est positionné sur un côté avant de la poutre de cadre de siège arrière (106), dans lequel lorsque chacune des sangles avant est fixée autour du cadre de siège avant, le bouton (132) de chacune des sangles avant est positionné sur un côté arrière de la poutre de cadre de siège avant.

10. Système selon la revendication 9, dans lequel les positions des boutons (132) des sangles avant (124) et des sangles arrière (124) se trouvant entre la poutre de cadre de siège avant (108) et la poutre de cadre de siège arrière (106) empêchent le passager assis derrière le cadre de siège de voir les boutons et d'y accéder.

11. Système selon une quelconque revendication précédente, dans lequel chacun du panneau supérieur (114), du panneau d'extrémité (116), du panneau inférieur (120), du premier panneau latéral (118), du second panneau latéral (118), du panneau incurvé (122) et du rabat de fermeture (128) est au moins composé de tissu.

12. Système selon une quelconque revendication précédente, dans lequel un angle entre le panneau supérieur (114) et le panneau d'extrémité (116) est obtus.

13. Système selon une quelconque revendication précédente, dans lequel un angle entre le panneau inférieur (120) et le panneau incurvé (122) est obtus.

14. Système selon une quelconque revendication précédente, dans lequel un angle entre le panneau inférieur (120) et le panneau d'extrémité (116) est un angle droit ; et/ou
dans lequel un angle entre le panneau inférieur (120) et le premier panneau latéral (118) est un angle droit, dans lequel un angle entre le panneau inférieur et le second panneau latéral (118) est un angle droit ; et/ou
dans lequel la poutre de cadre de siège arrière (106) est plus haute que la poutre de cadre de siège avant.

15. Système selon une quelconque revendication précédente, dans lequel le véhicule est un aéronef.
